# EUROPÄISCHE PATENTSCHRIFT

(11) **EP 1 214 202 B1**
(45) Veröffentlichungstag und Bekanntmachung des Hinweises auf die Patenterteilung: **14.12.2005**
(21) Anmeldenummer: 00967539.8
(22) Anmeldetag: 25.08.2000
(51) Int. Cl.: B42D 15/10

(54) **KARTENFÖRMIGER DATENTRÄGER UND VERFAHREN ZU SEINER HERSTELLUNG**
CARD-SHAPED DATA CARRIER AND METHOD FOR PRODUCING SAME
SUPPORT DE DONNEES SOUS FORME DE CARTE ET SON PROCEDE DE PRODUCTION

(30) Priorität: 30.08.1999 DE 19941225; 09.03.2000 DE 10011486
(43) Veröffentlichungstag der Anmeldung: 19.06.2002
(73) Patentinhaber: Orga Kartensysteme GmbH, 33104 Paderborn (DE)
(72) Erfinder: FANNASCH, Lothar, 33647 Bielefeld (DE); FISCHER, Dirk, 33106 Paderborn (DE); HENNEMEYER-SCHWENKER, Michael, 33165 Herbram (DE)
(86) Internationale Anmeldenummer: PCT/DE2000/002902
(87) Internationale Veröffentlichungsnummer: WO 2001/015910

(56) Entgegenhaltungen:
- EP-A- 0 279 600
- EP-A- 0 738 609
- WO-A-89/05730
- WO-A-97/16318
- WO-A-97/48016
- US-A- 4 602 263

## Beschreibung

Die Erfindung bezieht sich auf einen kartenförmigen Datenträger und auf ein Verfahren zu seiner Herstellung.

Kartenförmige Datenträger dieser Art sind Ausweiskarten, Bankkarten, Kreditkarten o.dgl. aus Kunststoff.

Aus der DE 29 07 004 C2 ist es bekannt, visuell lesbare Informationen auf Ausweiskarten mittels Laserstrahlung aufzubringen. Dabei wird die Information durch eine Verkohlung und/oder Karbonisierung des Kunststoffmaterials sichtbar, wobei die Information sich schwarz oder grau vor einem andersfarbigen Hintergrund (z.B. opak oder transparent) abhebt. Andere Farben lassen sich damit nicht erzeugen. Dabei ist die Laserbeschriftung gegenüber anderen Beschriftungsverfahren gegenüber Fälschungen oder Manipulationen sicherer.

In der WO 97/48016 wird eine Methode für das Bedrucken einer polymerisierten, thermoplastischen oder wärmehärtbaren Schicht des Körpers eines Datenträgers und ein Datenträger insbesondere eine Chipkarte, die eine polymerisierte Schicht enthält, offenbart.

Die Methode enthält die Schritte:
- Mischen eines polymerisierbaren thermoplastischen Bindemittels mit mindestens einer photochromen Verbindung, die auf Laserstrahlung einer vorbestimmten Wellenlänge in der Weise reagiert, dass sie von einem ersten Zustand in einen zweiten farbigen Zustand übergeht,
- Aussetzen dieser Mischung einer derartigen Laserstrahlung, wodurch die Schicht die Farbe ändert (normalerweise von farblos nach farbig),
- Fixieren des gefärbten zweiten Zustands,
- Polymerisation der Mischung.

Photochromen Verbindungen zeichnen sich dadurch aus, dass sie angeregt durch elektromagnetische Strahlung ihre Materialeigenschaften bezüglich ihres Absorptionsspektrums verändern. Ohne Bestrahlung haben diese Verbindungen ein anderes Absorptionsspektrum mit anderen Absorptionsbanden als nach einer Bestrahlung. Da dieser Vorgang jedoch reversibel ist, muß er fixiert werden und anschließend muß die entsprechende Schicht noch polymerisiert werden. Es handelt sich also um ein recht aufwendiges Verfahren.

Aus der WO 89/05730 ist ein Verfahren zur Erzeugung eines farbigen Bildes auf einem Substrat (z.B. eine Karte), das aus mehreren Schichten besteht, bekannt. Eine dieser Schichten, die Bildschicht, enthält eine oder eine Reihe von farbgebende Komponenten, die zuerst farblos oder transparent sind. Zur Erzeugung des Bildes werden vorbestimmte Regionen der Bildschicht einer Bestrahlung einer vorbestimmten Wellenlänge ausgesetzt, wodurch die Komponenten in den Regionen, die mit der Bestrahlung ausgesetzt werden, aktiviert werden, die korrespondierende Farbe zu entwickeln. Dies hat den Nachteil, dass entweder nur ein einfarbiges Bild möglich ist, oder aber die Bildschärfe gering ist, da immer drei nebeneinander liegende Komponenten einen Bildpunkt ausmachen.

In der EP-A-0279600 wird ein Beschriftung bevorzugter Weise in Form einer Folie beschrieben, die eine photochrome Schicht enthält, die wiederum photochrome Verbindungen enthält. Die ursprünglich farblosen photochromen Verbindungen werden bei Betrachtung unter UV-Licht farbig. Bei einigen photochromen Verbindungen, die später das Bild darstellen, wird die photochrome Eigenschaft durch Beaufschlagung mit einem Laser zerstört. Die transparente Eigenschaft bleibt unter Tageslicht erhalten. Bei Betrachtung unter UV-Licht werden die nicht veränderten Verbindungen farbig; die Veränderten bleiben transparent. Auf diese Art und Weise erscheint unter UV-Licht ein Bild. Unter Tageslicht ist die gesamte Folie transparent.

Aus der US-A-4602263 ist ein Verfahren zum Erzeugen eines farbigen Bildes bekannt. Innerhalb einer Schicht sind neben farbgebenden Komponenten Absorber angeordnet. Bei Beaufschlagung mit Laserstrahlung einer Längenwelle im Infrarotbereich, die an das Absorptionsvermögen des Absorbers angepasst ist, erwärmen sich die Absorber und durch die Wärme wird das Absorptionsverhalten der farbgebenden Komponenten im sichtbaren Spektralbereich geändert. Nachteil dieses Verfahrens ist die relativ schlechte Bildschärfe, da auch benachbarte farbgebende Komponenten ihr Absorptionsverhalten durch die Wärme ändern können.

In der EP-A-0738609 wird ein ähnliches Verfahren beschrieben, Hier soll allerdings der Absorber nicht zum Farbeffekt beitragen. Er wird daher im Zuge des Verfahrens geblichen.

Darüber hinaus ist es auch bekannt, daß man mittels Laserstrahlung gravieren kann, insbesondere ist es möglich, einzelne Schichten eines mehrschichtigen Kartenkörpers lokal abzutragen. Dieser Umstand wird gemäß DE 30 48 733 C2 ausgenutzt, um verschieden farbige Informationen auf Ausweiskarten aufzubringen. Dabei wird ein mehrschichtiger Kartenkörper verwendet, dessen Schichten unterschiedlich farbig sind. Durch das lokale Abtragen einzelner Schichten durch Laserstrahlung, wird die darunter liegende andersfarbige Schicht sichtbar. Dies Verfahren zur Beschriftung von kartenförmigen Datenträgern hat jedoch den Nachteil, daß die Oberfläche des Datenträgers durch das Abtragen beschädigt wird.

Aufgabe der Erfindung ist es einen kartenförmigen Datenträger und ein Verfahren zur Herstellung desselben zu schaffen, der das Aufbringen von farbigen Informationen mittels der sicheren Laserbearbeitung ermöglicht, ohne die Oberfläche des Datenträgers zu beschädigen.

Diese Aufgabe wird durch die kennzeichnenden Merkmale der unabhängigen Ansprüche gelöst. Ein erfindungsmäßiger, kartenförmiger Datenträger weist mindestens zwei Schichten auf. Jede Schicht weist jeweils schichtspezifische Farbpigmente mit Absorptionsmaxima in jeweils unterschiedlichen, schichtspezifischen Spektralbereichen auf. Diese Pigmente verlieren unter Beaufschlagung mit einer Laserstrahlung, die im Wellenlängenbereich des Absorptionsmaximums dieser Pigmente liegt, teilweise ihr Absorptionsvermögen für diesen Wellenlängenbereich. Der Erfindung liegt die Idee zugrunde, dass bei einem solchen Datenträger mindestens eine Schicht lokal dort, wo sie mit einer Laserstrahlung, die im Wellenlängenbereich des Absorptionsmaximums der Pigmente dieser Schicht liegt, beaufschlagt wird, zumindest nahezu transparent wird. Auf diese Weise wird eine visuell lesbare Information in Form einer Änderung der optischen Eigenschaft aufgrund einer irreversibel durch einen Laserstrahl bewirkten Materialveränderung in die Schichten eingebracht.

Ein erfindungsmäßiges Verfahren zur Herstellung des beschriebenen kartenförmigen Datenträgers besteht aus den Schritten:
- Bereitstellung eines kartenförmigen Datenträgers, der mindestens zwei Schichten aufweist, die wiederum jeweils schichtspezifische Farbpigmente mit Absorptionsmaxima in jeweils unterschiedlichen, schichtspezifischen Spektralbereichen aufweisen,
- Beaufschlagung des Kartenkörpers mit Laserstrahlung, die im Wellenlängenbereich des Absorptionsmaximums der Pigmente einer Schicht liegt, wodurch diese Schicht lokal dort, wo sie beaufschlagt wird, zumindest nahezu transparent wird.

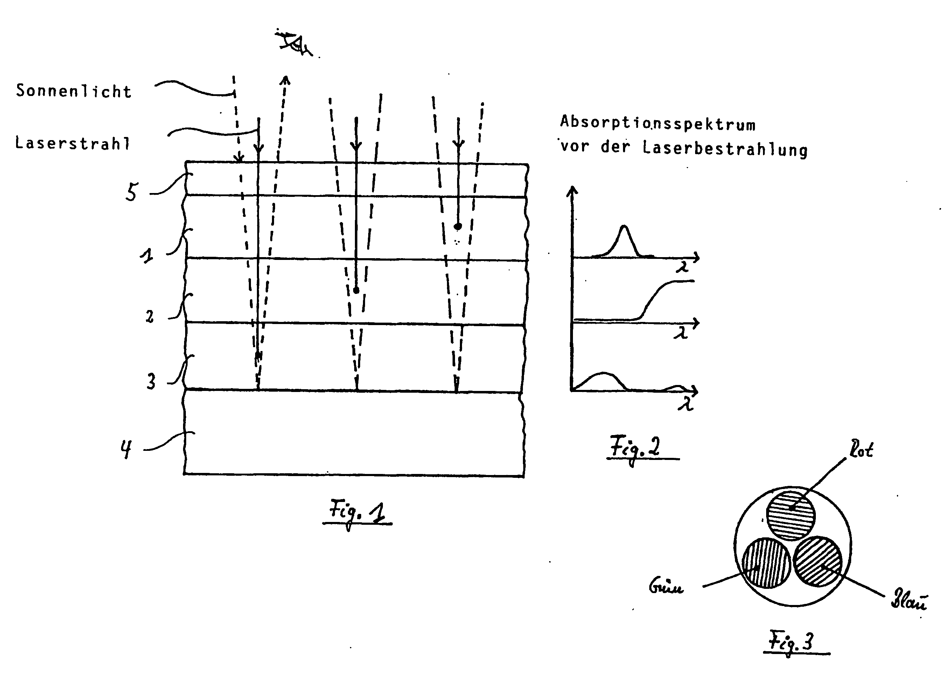

Figur 1 zeigt einen Ausschnitt aus einem kartenförmigen Datenträger, der drei Schichten (1,2,3) aufweist, die jeweils vor der Laserbestrahlung unterschiedliche Absorptionsspektren aufweisen. Diese drei Schichten (12,3) befinden sich vorzugsweise auf einer weißen Substratschicht (4). Über den drei Schichten (1,2,3) deren Absorption unter dem Einfluß der Laserstrahlung geändert werden soll, befindet sich außerdem eine im sichtbaren Wellenlängenbereich und im Bereich der verwendeten Laserstrahlung transparente Deckschicht (5).

In der Figur 2 sind die Absorptionsspektren der Schichten (1,2,3) vor der Laserbestrahlung gezeigt.

Das Absorptionsverhalten vor der Laserbestrahlung bzw. das Reflexionsverhalten nach der Laserbeschriftung der einzelnen Schichten wird durch entsprechende farbgebende Pigmente bewirkt, die den Schichten als Zusätze zugegeben werden. Idealewweise wird eine Schicht durch die Laserstrahlung völlig ausgebleicht, so daß die Schicht für sich allein lokal (im Laserschreibfleck) zumindest nahezu tranparent wird.

Die Farbe eines Punktes dieses kartenförmigen Datenträgers bei Betrachtung unter weißem Licht (z.B. Sonnenlicht) entsteht durch subtraktive Farbmischung. Bei einem einfallendenLichtstrahl, der die einzelnen Schichten passiert werden beim passieren von nicht transparenten Schichten Farbanteile des ursprünglich weißen Lichte absorbiert. Der an der weißen Substratschicht reflektierte Lichtstrahl erscheint einem Betrachter in der Farbe die durch Substraktion der absorbierten Farbanteile von weißem Licht entsteht.

Im dargestellten Ausführungsbeispiel weist die erste lasersensitive Schicht (1) ein Absorptionsmaximum im grünen Spektralbereich auf. Vor der Laserbestrahlung ist diese Schicht (1) magentafarben. Die zweite lasersensitive Schicht (2) weist ein Absorptionsmaximum im roten Spektralbereich auf. Vor der Laserbestrahlung ist diese Schicht (2) cyanfarben. Die dritte lasersensitive Schicht (1) weist ein Absorptionsmaximum im blauen Spektralbereich auf. Vor der Laserbestrahlung ist diese Schicht (1) gelb.

Unter Bestrahlung mit einem grünen Laserstrahl hinreichender Intensität verliert die erste lasersensitive Schicht (1) lokal dort, wo sie mit der grünen Laserstrahlung beaufschlagt wurde, ihr Absorptionsvermögen, damit ist diese Schicht (1) an dieser Stelle transparent. Beim Betrachten dieser Stelle mit weißem Sonnenlicht erscheint dieser Punkt (Fleck) grün, wobei die Farbgebung aufgrund der subtraktiven Farbmischung bewirkt wird. Der einfallende Lichtstrahl (weißes Licht, z.B. Sonnenlicht) passiert die nach der Laserstrahlbeaufschlagung transparente erste Schicht (1). Beim Durchgang durch die zweite Schicht (2) wird der rote Anteil aus dem weißen Lichtstrahl durch Absorption herausgefiltert. Beim Durchgang durch die dritte Schicht (3) wird der blaue Anteil aus dem Lichtstrahl herausgefiltert, so daß von dem ursprünglichen weißen Lichtstrahl nur noch der grüne Anteil übrigbleibt. Schließlich wird der grüne Lichtstrahl an der weißen Substratschicht (4) reflektiert. Für den Betrachter erscheint dieser Punkt grün.

Unter Bestrahlung mit einem roten Laserstrahl hinreichender Intensität verliert die zweite lasersensitive Schicht (1) lokal dort, wo sie mit der roten Laserstrahlung beaufschlagt wurde, ihr Absorptionsvermögen, damit ist diese Schicht (2) an dieser Stelle transparent. Beim Betrachten dieser Stelle mit weißem Sonnenlicht erscheint dieser Punkt (Fleck) rot, wobei die Farbgebung aufgrund der subtraktiven Farbmischung bewirkt wird. Beim Durchgang durch die erste Schicht (1) wird der grüne Anteil aus dem weißen Lichtstrahl herausgefiltert. Die an dieser Stelle nach der Laserstrahlbeaufschlagung transparente zweite Schicht (2) passiert der Lichtstrahl ohne Absorption. Beim Durchgang durch die dritte Schicht (3) wird der blaue Anteil aus dem Lichtstrahl herausgefiltert, so daß von dem ursprünglichen weißen Lichtstrahl nur noch der rote Anteil übrigbleibt. Schließlich wird der rote Lichtstrahl an der weißen Substratschicht (4) reflektiert. Für den Betrachter erscheint dieser Punkt rot.

Unter Bestrahlung mit einem blauen Laserstrahl hinreichender Intensität verliert die dritte lasersensitive Schicht (3) lokal dort, wo sie mit der blauen Laserstrahlung beaufschlagt wurde, ihr Absorptionsvermögen, damit ist diese Schicht (3) an dieser Stelle transparent. Beim Betrachten dieser Stelle mit weißem Sonnenlicht erscheint dieser Punkt (Fleck) blau, wobei die Farbgebung aufgrund der subtraktiven Farbmischung bewirkt wird. Beim Durchgang durch die erste Schicht (1) wird der grüne Anteil aus dem weißen Lichtstrahl herausgefiltert. Beim Durchgang durch die zweite Schicht (2) wird der rote Anteil durch Absorption herausgefiltert. Die an dieser Stelle nach der Laserstrahlbeaufschlagung transparente dritte Schicht (3) passiert der Lichtstrahl dann ohne Absorption, so daß von dem ursprünglichen weißen Lichtstrahl nur noch der blaue Anteil übrigbleibt. Schließlich wird der blaue Lichtstrahl an der weißen Substratschicht (4) reflektiert. Für den Betrachter erscheint dieser Punkt blau.

Auf diese Art und Weise kann ein ursprünglich schwarzer, grau oder dunkel brauner Fleck rot, blau oder grün eingestellt werden- je nachdem welche der lasersensitiven Schichten (1,2,3) in dem Sandwich-Aufbau man bleicht.

In Figur 3 ist das Farbtripel, das sich auf diese Weise erstellen läßt, dargestellt. Selbstverständlich kann die Laserstrahlbeaufschlagung auch so erfolgen, daß die Farbpunkte übereinanderliegen.

Die lasersensitiven Schichten (1,2,3) sind in einer Ausführungsform Kunststoffolien, die durch Lamination miteinander verbunden werden. Dabei kann zumindest eine lasersensitive Schicht (1,2,3) auch eine Klebeschicht zwischen Kunststoffolien innerhalb des Sandwich-Aufbaus sein.

In einer alternativen Ausführungsform werden die lasersensitiven Schichten (1,2,3) in einem Beschichtungsverfahren - zum Beispiel als Lack - Schicht für Schicht übereinander auf die weiße Substratschicht (4) aufgetragen.

Der Schichtaufbau hat gegenüber einer Schicht, in der alle bleichbaren Farbpigmente (magenta, cyan und gelb) enthalten sind, einen großen Vorteil. Die Farbpigmente unterscheiden sich nämlich nicht nur hinsichtlich ihres Absorptionsmaximums, wo sie geblichen werden, sondern ansonsten auch hinsichtlich ihrer chemischen und physikalischen Eigenschaften, insbesondere läßt sich nicht jedes Pigment in jede Kunststoffolie oder Lack einbringen. Darüber hinaus können die Pigmente sich auch untereinander beeinflussen. Wählt man dagegen für jedes Pigment eine eigene Schicht, so kann die Kunststoffolie bzw. der Lack speziell auf dieses Pigment abgestimmt sein.

Selbstverständlich ist die Erfindung nicht auf drei lasersensitive Schichten beschränkt. Vielmehr können auch zwei oder vier lasersensitive Schichten vorhanden sein.

## Patentansprüche

1. Kartenförmiger Datenträger, der mindestens zwei Schichten (1, 2, 3) aufweist, in die visuell lesbare Informationen in Form einer Änderung der optischen Eigenschaft aufgrund einer irreversibel durch einen Laserstrahl bewirkten Materialveränderung eingebracht sind **dadurch**, dass die Schichten (1, 2, 3) jeweils schichtspezifische Farbpigmente mit Absorptionsmaxima in jeweils unterschiedlichen, schichtspezifischen Spektralbereichen aufweisen, die unter dem Einfluss von Laserstrahlung mit einem Wellenlängenbereich, der im Bereich des schichtspezifischen Absorptionsmaximums liegt, ihr Absorptionsvermögen für diesen Wellenlängenbereich zumindest teilweise verlieren,
**dadurch gekennzeichnet, dass**
mindestens eine Schicht lokal dort, wo sie mit einer Laserstrahlung, die im Wellenlängenbereich des Absorptionsmaximums der Pigmente dieser Schicht liegt, beaufschlagt wird, zumindest nahezu transparent wird.

2. Kartenförmiger Datenträger nach einem der vorstehenden Ansprüche, **dadurch gekennzeichnet, dass** zumindest eine der Schichten (1, 2, 3) für sichtbares Licht (400 nm bis 800 nm) zumindest teilweise transparent ist.

3. Kartenförmiger Datenträger nach einem der vorstehenden Ansprüche, **dadurch gekennzeichnet, dass** die Schichten (1, 2, 3), deren Absorptionsvermögen unter dem Einfluss der Laserstrahlung reduziert wird, auf einer weißen Substratschicht (4) angeordnet sind.

4. Kartenförmiger Datenträger nach einem der vorstehenden Ansprüche, **dadurch gekennzeichnet, dass** über den Schichten (1, 2, 3), deren Absorptionsvermögen unter dem Einfluss der Laserstrahlung reduziert wird, eine für sichtbares Licht transparente Deckschicht (5) angeordnet ist.

5. Kartenförmiger Datenträger nach einem der vorstehenden Ansprüche, **dadurch gekennzeichnet, dass** die Schichten (1, 2, 3) übereinander laminierte Kunststofffolien sind, in denen die Farbpigmente enthalten sind.

6. Kartenförmiger Datenträger nach einem der vorstehenden Ansprüche, **dadurch gekennzeichnet, dass** die Schichten (1, 2, 3) übereinander angeordnete Lackschichten sind, in denen die Farbpigmente enthalten sind.

7. Verfahren zum Aufbringen von Informationen auf kartenförmige Datenträger, wobei der kartenförmige Datenträger mindestens zwei Schichten (1, 2, 3) aufweist, in die visuell lesbare Informationen in Form einer Änderung der optischen Eigenschaft aufgrund einer irreversibel durch einen Laserstrahl bewirkten Materialveränderung **dadurch** eingebracht werden können, dass die Schichten (1, 2, 3) jeweils schichtspezifische Farbpigmente mit Absorptionsmaxima in jeweils unterschiedlichen, schichtspezifischen Spektralbereichen aufweisen, die unter dem Einfluss von Laserstrahlung mit einem Wellenlängenbereich, der im Bereich des schichtspezifischen Absorptionsmaximums liegt, ihr Absorptionsvermögen für diesen Wellenlängenbereich zumindest teilweise verlieren,
**gekennzeichnet durch**
- die Bereitstellung eines kartenförmigen Datenträgers, der mindestens zwei Schichten (1, 2, 3) aufweist, die wiederum jeweils schichtspezifische Farbpigmente mit Absorptionsmaxima in jeweils unterschiedlichen, schichtspezifischen Spektralbereichen aufweisen,
- die Beaufschlagung des Kartenkärpers mit Laserstrahlung, die im Wellenlängenbereich des Absorptionsmaximums der Pigmente einer Schicht (1,2,3) liegt, wodurch diese Schicht lokal dort, wo sie beaufschlagt wird, zumindest nahezu transparent wird.

## Claims

1. Card-shaped data carrier having at least two layers (1, 2, 3) into which visually readable information is introduced in the form of changed optical characteristics produced by a material change irreversibly effected by means of a laser beam, in that the layers (1, 2, 3) have in each case layer-specific color pigments with absorption maxima in respectively different, layer-specific spectral ranges which, under the influence of laser radiation having a wavelength range in the region of the layer-specific absorption maximum, at least partially lose their absorption capacity for said wavelength range,
**characterized in that**
at least one layer becomes at least almost transparent locally where it is subjected to laser radiation in the wavelength range of the absorption maximum of the pigments of said layer.

2. Card-shaped data carrier according to one of the preceding claims, **characterized in that** at least one of the layers (1, 2, 3) is at least partially transparent to visible light (400 nm to 800 nm).

3. Card-shaped data carrier according to one of the preceding claims, **characterized in that** the layers (1, 2, 3) whose absorption capacity is reduced under the influence of the laser radiation are arranged on a white substrate layer (4).

4. Card-shaped data carrier according to one of the preceding claims, **characterized in that** a covering layer (5) that is transparent to visible light is arranged over the layers (1, 2, 3) whose absorption capacity is reduced under the influence of the laser radiation.

5. Card-shaped data carrier according to one of the preceding claims, **characterized in that** the layers (1, 2, 3) are vertically laminated plastic foils containing the color pigments.

6. Card-shaped data carrier according to one of the preceding claims, **characterized in that** the layers (1, 2, 3) are superjacently arranged coating layers containing the color pigments.

7. Method for applying information to card-shaped data carriers, in which the card-shaped data carrier has at least two layers (1, 2, 3) into which visually readable information can be introduced in the form of changed optical characteristics produced by a material change irreversibly effected by means of a laser beam, in that the layers (1, 2, 3) have in each case layer-specific color pigments with absorption maxima in respectively different, layer-specific spectral ranges which, under the influence of laser radiation having a wavelength range in the region of the layer-specific absorption maximum, at least partially lose their absorption capacity for said wavelength range,
**characterized by**
- the provision of a card-shaped data carrier having at least two layers (1, 2, 3), which in turn have in each case layer-specific color pigments with absorption maxima in respectively different, layer-specific spectral ranges,
- subjection of the card body to laser radiation lying in the wavelength range of the absorption maximum of the pigments of a layer (1, 2, 3), whereby said layer becomes at least almost transparent locally where it is subjected to said radiation.

## Revendications

1. Support de données en forme de carte qui présente au moins deux couches (1,2,3) dans lesquelles des informations, lisibles de manière visuelle, sont appliquées sous la forme d'une modification de la propriété optique en raison d'une modification irréversible de la matière, provoquée par un faisceau laser, du fait que lesdites couches (1,2,3) présentent chacune des pigments colorés, spécifiques à la couche, avec maxima d'absorption dans des domaines spectraux différents, spécifiques à la couche respective, qui, sous l'influence d'un rayonnement laser d'un domaine de longueurs d'ondes, situé dans le domaine du maximum d'absorption spécifique à la couche, perdent, au moins partiellement, leur absorptivité pour ce domaine spectral,
**caractérisé en ce que**
au moins une couche devient au moins presque transparent localement, là où elle est soumise à un rayon laser qui est situé dans le domaine de longueurs d'ondes du maximum d'absorption des pigments de cette couche.

2. Support de données en forme de carte selon l'une des revendications précédentes, **caractérisé en ce qu'**au moins l'une des couches (1,2,3) est, au moins partiellement, transparente à la lumière perceptible (de 400 nm à 800 nm).

3. Support de données en forme de carte selon l'une des revendications précédentes, **caractérisé en ce que** les couches (1,2',3), dont l'absorptivité est réduite sous l'influence du rayonnement laser, sont disposées sur une couche de base blanche (4).

4. Support de données en forme de carte selon l'une des revendications précédentes, **caractérisé en ce que**, au-dessus des couches (1,2,3), dont l'absorptivité est réduite sous l'influence du rayonnement laser, est disposée une couche de recouvrement (5) transparente pour la lumière perceptible.

5. Support de données en forme de carte selon l'une des revendications précédentes, **caractérisé en ce que** les couches (1,2,3) sont des feuilles en matière synthétique, stratifiées les unes au dessus des autres, dans lesquelles sont compris des pigments colorés.

6. Support de données en forme de carte selon l'une des revendications précédentes, **caractérisé en ce que** les couches (1,2,3) sont des couches de laque superposées, dans lesquelles sont compris des pigments colorés.

7. Procédé pour l'application d'informations sur un support de données en forme de carte, ledit support de données en forme de carte présentant au moins deux couches (1,2,3), dans lesquelles peuvent être appliquées des informations visuellement lisibles sous la forme d'une modification de la propriété optique en raison d'une modification irréversible de la matière, provoquée par un faisceau laser, du fait que lesdites couches (1,2,3) présentent chacune des pigments colorés, spécifiques à la couche, avec maxima d'absorption dans des domaines spectraux différents, spécifiques à la couche respective, qui, sous l'influence d'un rayonnement laser d'un domaine de longueurs d'ondes, situé dans le domaine du maximum d'absorption spécifique à la couche, perdent, au moins partiellement, leur absorptivité pour ce domaine spectral
**caractérisé par**
- la mise à disposition d'un support de données en forme de carte, qui présente au moins deux couches (1,2,3), qui, de leur côté, présentent chacune des pigments colorés spécifiques à la couche, avec maxima d'absorption dans différents domaines spectraux spécifiques à la couche respective,
- la soumission du corps de carte à une faisceau laser qui est situé dans le domaine de longueurs d'ondes du maximum d'absorption des pigments d'une couche (1,2,3), ce en raison de quoi la couche devient au moins presque transparente, localement, là où elle est influencée.
